# EUROPEAN PATENT APPLICATION

(11) **EP 2 575 068 A1**
(43) Date of publication of application: **03.04.2013**
(21) Application number: 11183624.3
(22) Date of filing: 30.09.2011
(51) Int. Cl.: G06F 21/00

(54) **System and method for providing hardware-based security**

(71) Applicant: Certicom Corp., Mississauga, Ontario L4W 0B5 (CA)
(72) Inventor: Poeluev, Yuri, Mississauga, Ontario L4W 0B5 (CA)
(74) Representative: Finnie, Peter John

(57) **Abstract**

In some implementations, a method for managing resources of a device includes receiving, by a system-on-chip (SoC) in the device, from a customer, a request to access one or more resources of the SoC. The SoC includes a non-volatile memory (NVM), a feature register, programming history, and a plurality of resources including the one or more resources. A customer identifier (CID) is identified based on the received request. The customer is authenticated using a certificate including the CID. Whether the SoC grants, to the customer, access to the one or more resources is determine using the feature register and the CID.

## Description

### TECHNICAL FIELD

This invention relates to a system and method for providing hardware-based security.

### BACKGROUND

A wide variety of consumer and commercial products include a System-on-Chip (SoC) where many features are integrated on a single silicon die. Manufacturers may use the same SoC in different platforms with various features enabled/disabled in order to differentiate the final products in the market. Unauthorized enablement of features represents significant revenue loss to companies.

Traditional methods of feature programming include: outright customization of the SoC silicon through different mask sets; the use of silicon fuses that may be selectively "blown" to control a feature; the use of jumper wires on motherboards; and the loading of different components and firmware per product.

The provisioning of features occurs in a variety of manufacturing locations whose facilities perform a range of production steps including wafer fabrication for chips, assembly, packaging, test, and system integration where components and firmware are integrated into a final product or assembly. These manufacturing locations are typically overseas and out of the control of the semiconductor company outsourcing the contract manufacturing to these facilities. As a result, there is little reason for the semiconductor company to trust the distributed manufacturing facility to manage the distribution and collection of proprietary and sensitive data such as feature provisioning commands, content protection key data, software/firmware code images, test results and yield reporting data.

### DESCRIPTION OF DRAWINGS

FIGURE 1 is a system for managing access to resources of an SoC;
FIGURE 2 is a block diagram of an AMS in one configuration for utilizing the Asset Control Core (ACC);
FIGURE 3 is a block diagram showing further detail of the device and ACC shown in FIGURE 2;
FIGURE 4 is a block diagram showing further detail of hardware components of the ACC shown in FIGURES 2 and 3;
FIGURE 5 is a flow diagram illustrating a key agreement protocol between the backend, appliance, and ACC;
FIGURES 6a-f are flow diagrams illustrating a sequence of operations performed in a feature activation routine for virtual inventory; and
FIGURE 7 is a flow chart illustrating an example method of managing resources of an SoC.

Like reference symbols in the various drawings indicate like elements.

### DETAILED DESCRIPTION

The present disclosure is directed to a system 200 for hardware-based security. For example, the system 200 may include a feature register on an SoC such that enables or prohibit customers (e.g., manufacturers) access to or configuration of resources of the SoC. Customers may include a semiconductor manufacturer, a device manufacturer, a retailer, a mobile network operator, a health care organization, a mobile payment infrastructure, a government agency, a military department, or others. Resources may include a feature, a parameter, a key, data, a hardware-module configuration data, a segment of memory, a service from a hardware module, software, hardware, firmware, personalization data, or other aspects of an SoC. In general, consumer and commercial products frequently include a System-on-Chip (SoC) that has many resources integrated on a single silicon die. In some implementations, manufacturers may use the same SoC in different platforms with various resources enabled or disabled in order to differentiate the final products in the market. Unauthorized enablement of features represents significant revenue loss to companies. Furthermore, when more than one manufacturer is involved in the SoC production, enabling/disabling features on the same SoC becomes a problem, in particular who is allowed to configure resources on the SoC (e.g., feature configuration access control) and what resources are enabled/disabled on the SoC by a particular customer (e.g., feature partitioning for different manufacturers). In some implementations, the system 200 may grant or prohibit access to resources based on one or more settings stored in memory. For example, the system 200 may upload settings into a feature register that indicates what resources are available to the host device as well as configuration settings for the available resources. As for configuration, the system 200 may grant or prohibit a customer an ability to configure resources of the SoC based on one or more settings stored in memory. For example, the system 200 may store customer identifiers (CIDs) and a list of resources configurable by the associated customer. Regardless, the system 200 may include one or more of the following: hardware-based point of trust on the silicon die, which may be compatible with Asset Management System (AMS); hardware-based security during the entire device lifecycle, from manufacture through retail channels, to consumer consumption onto "end-of-life" in a secure, reliable and auditable fashion; enabling and disabling resources on the device in a secure way; provides persistent memory (NVM) and controls access to the NVM in a secure and non-secure way, depending on the access control; ability to initiate and disable the device self-tests, health checks to make sure device has not been tampered with; locking out the device whenever too many invalid commands are attempted; and others. In addition, the system 200 may enable more than one manufacturer to manage the device lifecycle such as, for example, device serialization, device features, sensitive/non-sensitive data stored on the device, and others.

As for a high level description of the system 200, the system 200 illustrates that customers 102a-k may connect to a device 104. The device 104 includes an SoC 106 that integrates components of an electronic system on a single integrated chip. As illustrated, the SoC 106 includes a plurality of hardware modules 108a-n for providing services to the device 104 and an Access Control Core (ACC) 110 for controlling access to a feature register 112, non-volatile memory (NVM) 114, and the modules 108. The feature register 112 includes segments 116a-k that store CIDs and settings associated with resources of the SoC 106 during activation and/or configuration of the device 104. The segments 116a-k may store data in accordance to the following: permanent (where the CID is written to both feature register and NVM location of the feature register value); or temporary (where the CID is only written to the feature register, and the customer activation would only work till the ACC reset). The NVM 114 includes protected areas 118a-k for storing CIDs and settings, a shared area 120 for storing information in memory accessible by all customers, and programming history 122 for storing programming and configuration history. In some implementations, the ACC 110 has a feature register 112 (e.g., 256-bit register which can be increased or decreased based on the customer requirements), programing history 122 storing a programming history value (TAG), protected NVM memory 118a-k, and shared NVM memory 120. The protected NVM memory 118a-k can, in some implementations, only be accessed securely via secure ACC Feature Control Ticket (FCT) commands. By partitioning the feature register 112 into segments 116a-k where a segment 116 corresponds to a specific customer 102, a more flexible control of resources, including persistent memory state, on the device may be provided using the feature register 112, programming history 122, and the protected NVM 118a-k. In doing so, the ACC 110 may be more configurable to allow more than one vendor (or customer 102) to control resources of the SoC 106.

As for a high level description of operation, the ACC 110 may receive a request from a primary client 102a to update the protected area 118b. In response, the ACC 110 may determine a primary CID of the primary customer 102a using the response and authenticate the primary customer 102a based on the CID matching, for example, a primary CID hardcoded in the SoC 106. The primary customer 102a may then update segment 2 116b of the feature register 112 or the protected area 118 with a CID for a customer and associated settings. In some examples, the primary customer 102a may grant temporary access to resources of the SoC 106 by solely updating the feature register 112 with a CID and associated settings. In these instances, the stored information may be replaced or overwritten with data stored in the protected area 118 when the device is rebooted. In some examples, the primary customer 102a may grant access to resources of the SoC 106 by updating the protected area 118 with a CID and associated settings. When the device is initialized, the CID and settings stored in the protected area 118 are uploaded to the feature register 112 to grant access to the customer 102 associated with the CID. For example, the ACC 110 may be configured to process commands from two distinct customers 102 such as CID1 customer 102a and CID2 customer102b. The CID1 may be assigned to the original (or primary) chip vendor 102a, and this CID1 may be hardcoded in, for example, mask ROM. The CID2 may be assigned to the secondary chip vendor 102b, and the primary chip vendor 102a may grant resources to the secondary chip vendor 102b by programing the feature register bits using, for example, SETFEAT/SETFEAT_TEMP types of the FCT commands. In these instances, the customer IDs may be referred to as follows: CID1 - ID of the primary customer, i.e., CID1 customer; CID2 - ID of the 1st secondary customer, i.e., CID2 customer; CID3 - ID of the 2nd secondary customer, i.e., CID3 customer; and others.

As for a more detailed description, the customer 102 is generally an entity that manufacturers the SoC 106 or devices 104 that incorporate the SoC 106. For example, the customers 102a may be a semiconductor manufacturer that manufactures the SoC 106. In these examples, the customers 102b-k may be different device manufacturers that manufacture different devices 102, and each of the different devices 102 may use a different subset of resources of the SoC 106. In some implementations, the vendor (or customer 102) may be identified by its customer ID (CID), which may be part of a certificate issued to the vendor. When the ACC 110 is activated using, for example, the cmd[EXITTEST], by default the ACC 110 may be configured for one CID customer initially, which is called the primary CID customer 102a. If the primary CID customer 102a decides to grant control for another vendor (or customer 102), it may send the cmd[INITIALFCT/FCT] with a proper feature value. In these instances, the ACC 110 may be controlled by both the primary CID customer 102a and the secondary CID customer(s) 102b-k. Each customer 102a-k may be assigned a unique CID (e.g., unique 32-bit CID) by a third party. The CID value of 0 may be reserved and not assigned to any customer 102. As part of every cmd[INITIALFCT] or cmd[FCT] payload, an AMS Appliance (discussed below) may transmit its CID to the ACC 110, and the ACC 110 may use the transmitted CID to decide whether the action requested by the appliance is permitted or not.

As previously mentioned, the SoC 106 includes the hardware modules 108a-n and the ACC 110. The hardware modules 108a-n may be configured to provide one or more services to the device 104. For example, the hardware modules 108 may provide one or more features and/or functions to the operation of the device 104. For example, the hardware module 108a may be configured to operate a camera that captures images and/or video. In the illustrated implementation, the hardware modules 108a-n can include a display module, a button module, a speaker module, a microphone module, a camera module, a cellular antenna module, a Near Field Communication (NFC) module, a Global Positioning System (GPS) module, a cryptographic engine, a combination of the foregoing, or others. In some implementations, the hardware modules 108 may control or otherwise associated with one or more of the following: encrypted communication, motion sensors, light sensors, operating system, media processing, proximity sensors, camera, RF antenna, speakers, web browsing, microphone, a display (e.g., touch screen), or other hardware or software components. In the case of a cryptographic engine 108, the encrypted communication may be based on keys that are either of symmetric or asymmetric (i.e. public-key) type. In addition, different types of device 104 may have different use different hardware modules 108. In some examples example, one type of device 104 may include a touch screen controlled by one hardware module 108 and a different type of device 104 may include a non-touch screen display controlled by a different hardware module 108. In some examples, one type of device 104 may include a camera that captures still images and controlled by one hardware module 108, and a different type of device 104 may include a camera that captures both still images and video and controlled by a different hardware module 108. In some implementations, the mobile device 104 may use some hardware modules 108 that other different types do not operate. For example, the mobile device 104 may only execute a subset of the plurality of the hardware modules 108a-n. In short, different device types may execute the same, some, none, or different hardware modules 108 without departing from the scope of the disclosure.

The ACC 110 includes a feature register 112 and the NVM 114. The feature register 112 may store CIDs and information identifying resources available to the associated customer 102. In the illustrated implementation, the feature register 112 includes a plurality segments 116a-k and each segment 116 can be assigned to a customer 102 and identify resources available to the customer. For example, the segment 116 may identify one or more hardware modules 108 that the customer 102 may configure and access. In some implementations, the feature register 112 may segments 116 as followed: FEAT[0:31] (primary customer's features, 4 bytes); FEAT[32:63] (1st secondary CID - CID2, 4 bytes); FEAT[64:95] (1st secondary customer's features, 4 bytes); FEAT[96:127] (2nd secondary CID - CID3, 4 bytes); FEAT[128:159] (2nd secondary customer's features, 4 bytes); and others. When the device 104 is activated, i.e. brought to the functional state, initially the ACC 110 may only allow access for the primary customer 102a. The primary customer's ID, CID1, may be hard-coded onto the device SoC 106 to identify the primary customer 102a, so CID1 may not be stored in the feature register 112. Initially, all the bits in the feature register 112 may be zero. In order to simplify the description of the access activation for the secondary customer(s) 102, this process may be described in three stages. In stage 1 (Initial state), only CID1 may be used for access control. The primary customer 102 may have full control to enable/disable primary customer's resources and state of the protected NVM 114. Thus, the access may include the following: Primary customer: FEAT (full READ, full WRITE), TAG (full READ, full WRITE), protected NVM (full READ, full WRITE); and Secondary customer(s): N/A (not activated). In stage 2 (Activated 1st secondary customer temporarily, via FCT[SETFEAT_TEMP] by writing a non-zero CID2 into the feature register), the secondary customer 102b may be activated only for the period till the reboot or power-down. The access may include the following: Primary customer: FEAT (full READ, partial WRITE: FEAT[0:31]), TAG (full READ, partial WRITE: TAG[CID1]), protected NVM (partial READ: NVM[CID1], partial WRITE: NVM[CID1]); and 1st secondary customer: FEAT (full READ, partial WRITE: FEAT[64:95]), TAG (full READ, partial WRITE: TAG[CID2]), protected NVM (partial READ: NVM[CID2], partial WRITE: NVM[CID2]). After reboot/power-down, the access control returns to its state, prior to the temporary change of the feature register 112, i.e., going back to Stage 1. In stage 3 (Activated 1st secondary customer permanently, via FCT[SETFEAT] by writing a non-zero CID2 into the feature register),, the 1st secondary customer 102b may be activated permanently. The access may include the following: Primary customer: FEAT (full READ, partial WRITE: FEAT[0:31]), TAG (full READ, partial WRITE: TAG[CID1]), protected NVM (partial READ: NVM[CID1], partial WRITE: NVM[CID1]); and 1st secondary customer: FEAT (full READ, partial WRITE: FEAT[64:95]), TAG (full READ, partial WRITE: TAG[CID2]), protected NVM (partial READ: NVM[CID2], partial WRITE: NVM[CID2]). Similarly, the activation of the 2nd secondary customer 102c may be performed by writing a non-zero CID3 into the feature register 112 (e.g., FEAT[96:127]). The three stage described above are for illustration purposes only and the ACC 110 may operate in accordance with some, none, or all of the processes without departing from the scope of the disclosure.

In some implementations, the activation schemes and access ranges may slightly vary from customer to customer. In some examples, one primary customer 102a may want to restrict the activations to only the first one, where all secondary customers IDs (CID2, CID3, ...) must be set during the first (or initial) activation. In some examples, another primary customer 102a may allow full access to the feature register 112 even after the secondary customer(s) 102 have(s) been activated already (instead of partial WRITE: FEAT[0:31], see Stages 2 and 3). In some examples, another primary customer 102a may want to set itself as one of the secondary customers 102 to have access to one or more segments after the secondary customer's activation. In some examples, other primary customer might want to allow secondary customers to activate secondary customers as well. Other scenarios may be executed without departing from the disclosure. In other words, the described stages are only for demonstration of the flexibility that the proposed implementations provide (or can facilitate). The segment ranges/sizes for the feature register 112, TAG, and the protected NVM 114 may not be fixed either, and such specific numbers are included only for demonstration purposes. In some implementations, the feature register 112 may include 12 bytes (96 bits) of feature bits. For example, the feature register 112 may include the following segments 116: FEAT[0:31] feature bits for CID1 customer (4 bytes); FEAT[32:63] CID2 (4 bytes); and FEAT[64:95] feature bits for CID2 customer (4 bytes).

As for a more detailed implementation, the ACC protocol may define that the FEATSET field of FCTs is 256 bits (number of bits in this example is only for demonstration purposes and may vary from implementation to implementation). When rebooting, the firmware may load the FEAT bits from NVM 114 and copies them to the feature register 112 as part of its boot sequence. The CID2 may only be programmed by CID1 customer 102a using either the SETFEAT or the SETFEAT_TEMP type of the FCT commands. When the appliance 218 (APL) requests to set the CID2, the firmware may check if the CID2 has been programmed already or not by reading FEAT[32:63]. As long as the CID2 is still 0, i.e., the secondary CID hasn't been activated yet, the CID1 customer may be allowed to program FEAT[32:63], otherwise it will be considered as an error. The CID1 customer may change the CID2 temporarily with the SETFEAT_TEMP type of the FCT commands, as long as the CID2 is still 0. Once the CID2 isn't 0, whether it was set temporarily or permanently, it cannot be changed (unless CID2 was set temporarily via SETFEAT_TEMP and after the ACC reboot the CID2 goes back to 0, based on the feature register value stored in the NVM). The ACC 110 may revert back to the non-volatile CID2 value stored in the NVM 114 upon rebooting.

In some cases, the CID1 customer 102a may activate the CID2 with the same value as the CID1, which is very similar to the case when the CID2 is 0, i.e., when the CID1 customer 120a has full access to all the bits in the TAG field and the protected NVM 118. This scenario may be very useful for testing the CID2 activation functionality by the primary customer 102a by temporarily granting access via SETFEAT_TEMP type of the FCT commands. The primary customer 102a may not use SETFEAT for testing, which may permanently set the CID2 in the NVM 114.

In some implementations, the ACC 110 may process the following FCT commands: SETFEAT (cmd[INITIALFCT/FCT]); SETFEAT_TEMP (cmd[INITIALFCT/FCT]); and GETFEAT (cmd[INITIALFCT/FCT]). In regards to processing SETFEAT (cmd[INITIALFCT/FCT]), the ACC 110 may retrieve the CID from the ACC command. The ACC 110 may check if the CID2 is 0 (i.e. hasn't been activated yet) or equal to the CD1 (i.e. CID2 is activated as primary) in the feature register 112. If true (full access case), the ACC 110 may continue with the standard processing of the SETFEAT type of the FCT commands (assuming full access to the feature register, the TAG field and the Protected NVM) and finish. If false, the ACC 110 may check if the CID matches either the CID1 or the CID2. If there's no match, then return an error. If there is a match, the ACC 110 may take the FEATSET field and the TAG field of the FCT and mask out only those bits that are programmable, depending on whether the CID matches the CID1 or the CID2. The firmware may ignore the bits that are not programmable and doesn't consider them as errors. The ACC 110 may continue with the FEATSET field and TAG field (both adjusted in step 4) as normal and the rest of the normal processing SETFEAT type of the FCTs commands. In regards to SETFEAT_TEMP (cmd[INITIALFCT/FCT]), the ACC 110 may operate the same as for the SETFEAT, except that the FEATSET field value may not be written to the NVM 114. The command may only temporarily change the FEATSET register 112 until a reset or a power-down. The TAG field value may not be written to the NVM because the programming history (TAG) is only used for permanent configuration/provisioning operations. As for the GETFEAT (cmd[INITIALFCT/FCT]), the ACC 110 operates the same as for the SETFEAT except without the masking step and continuing processing as normal. The entire feature set may be readable by anyone with a valid CID.

The NVM 114 includes the protected areas 118, the shared area 120, and programing history 122. Each protected area 118 may be assigned to a different CID and identified associated resources accessible or configurable by the associated customer 102. The protected areas 118 may be partitioned in accordance with the following table:

**Table 1**

| Start Address | End Address | # of bytes allocated | NVM Type | Description |
|---|---|---|---|---|
| 0x0000 | 0x00FF | 256 | Private | Single segment, ACC's exclusive use only |
| 0x0100 | 0x02FF | 512 | Protected | R/W by CID1 |
| 0x0300 | 0x04FF | 512 | Protected | R/W by CID1 only if CID2 = 0 or CID2 = CID1, R/W by CID2 only if CID2 ! = 0 |
| 0x0500 | 0x0FFF | 2816 | Shared | Single segment, open R/W by anyone |
| Total Size: | | 4KB | | |

The addresses listed in the above table may be offsets, i.e., relative to the starting absolute address of the NVM 114 in the ACC memory, and these addresses may correspond to the addresses used in the address field of the WRACCESS/RDACCESS types of the FCTs commands for accessing the Protected NVM.

Just like the feature register 112, as long as the CID2 is still 0 or the CID2 is equal to the CID1, the CID1 customer 102 may read from and write to all of protected NVM 118. The CID1 customer 102a may not corrupt the NVM space of the CID2 customer 102b while the CID2 is not activated yet, i.e. still equals 0 because the CID1 customer may activate the CID2 at some point in the future. If a future activation does not occur, the CID1 customer 102a may change any part of the Protected NVM 118 without restrictions.

As for the shared area 120, a plurality of customers 102 may read and write to this portion of the NVM 114. In some implementations, there may be no change in logic for cmd[SHARENVMWR/SHARENVMRD]. The full reading from and writing to the NVM access may be granted to customer 102 in the clear, as long as the address range falls within the shared NVM region 120.

The programming history 122 is configured to store information that tracks programming or configuration of the SoC 106 by the customers 102. For example, the history 122 may identify the actions executed by the customer 102a when granting the customer 102b accesses to resources in the SoC 106. In some implementations, the history 122 may contain 64 bits located in the protected NVM memory and may be divided between multiple customers. For examples, the history may be portioned as followed: TAG[0:31] bits for CID1 customer (4 bytes); and TAG[32:63] bits for CID2 customer (4 bytes). The TAG record stored in the history 122 may be updated as a result of successfully processing a programming FCT command, i.e., the SETFEAT/WRACCESS types of the cmd[INITIALFCT/FCT]). The CID of the programming FCT command may determine which part of the TAG record is writable. The part that is not writable may remain unchanged. When updating the TAG record in the NVM 114, the firmware may use the same logic as for the FEATSET for masking out writable bits. The entire TAG record may be readable in the clear by anyone via the cmd[SHAREDNVMRD], because reading the TAG record may not require any valid CID.

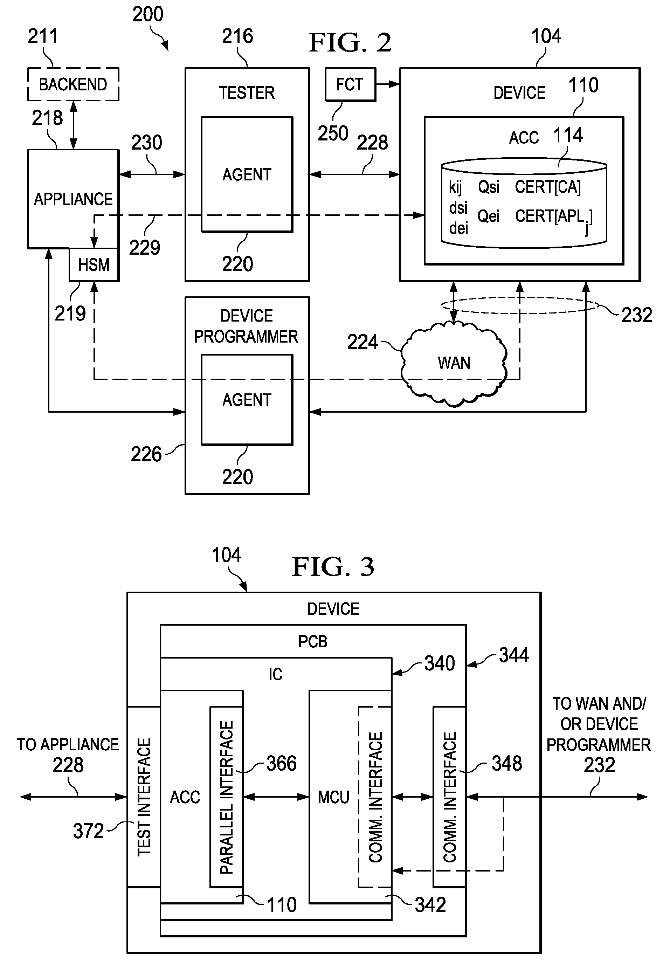

FIGURE 2 illustrates an example Asset Management System (AMS) 200 for providing the feature activation service module. In some implementations, the system 200 is configured to provision, communicate with, provide data to, collect data from, and activate resources within an ACC 110 embedded in an electronic device 104. As discussed above, the device 104 and in turn the ACC 110 is connected to a tester 216, which is used in a fabrication/manufacturing/assembly process. The tester 216 employs an agent 220, which is a software module running on the tester 216. The tester 216 is in turn connected to an appliance 218, which includes an HSM 219 that protects sensitive data and provides a secure zone within the appliance 218. As shown in Figure 2, the agent 220 facilitates a secure communication channel 229 between the HSM 219 and the ACC 110 for cryptographically securing communications there between. Over channel 229, an FCT 250 can be sent from the appliance 218 to the ACC 110. The appliance 218 may be connected to a backend infrastructure 211, which may provide a certifying authority (CA), a database, and a controller 222 for controlling one or more appliances 218 as will be explained in greater detail below.

In addition to being connected to the tester 216, the ACC 110 may also, either at the same time or at some later time (or other time during the process), be connected to a user interface (UI) over a wide-area-network (WAN) 224 or a device programmer 226. The device programmer 226 may also connect to the ACC 110 via the WAN 224 as shown. The device programmer 226 and/or WAN 224 can connect to the device 104 and ACC 110 using any suitable connection, for example, serial, parallel, wired, wireless, infrared, RFID, etc. In this example, the ACC 110 is connected to the tester 216 over a standard testing protocol/connection 228 such as JTAG (Joint Test Action Group) IEEE-1 149 test interface. The tester 216 and appliance 218 are connected over a suitable connection 230 depending on their relative locations. In the examples, the appliance 218 is located at the same physical facility as the tester 216 and therefore the connection 230 may be a local area network (LAN).

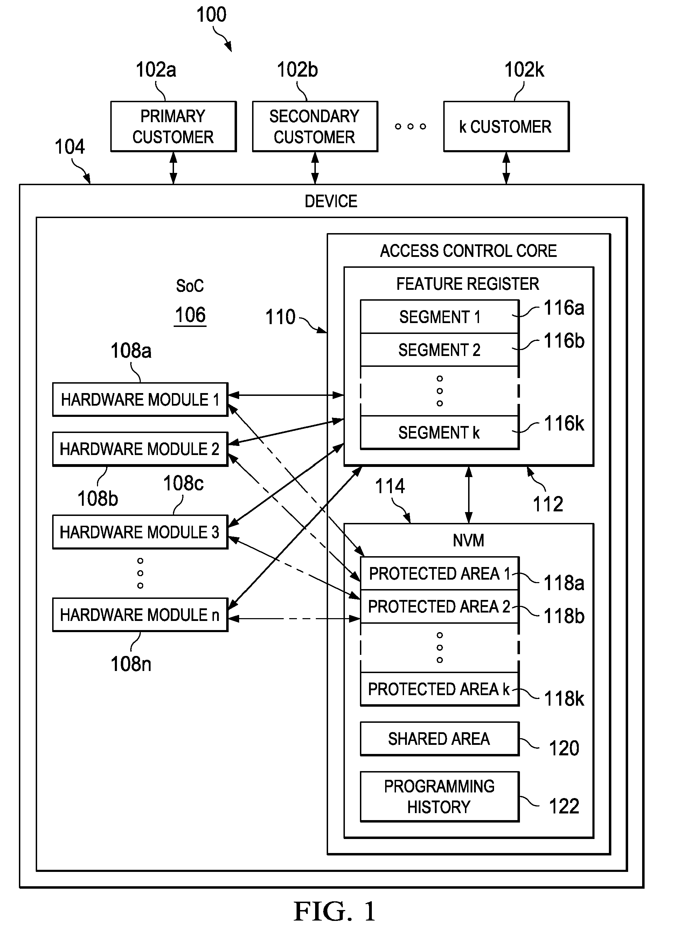

The ACC 110 can comprise various types of memory including NVM 114 of FIGURE 1. The ACC 110 uses a portion of memory to store, either persistently or ephemerally, various keys and certificates. FIGURE 2 illustrates various keys and certificates that are used in the following examples. A static private key dsi, a static public key Qsi (also referred to as the ACCs UID), an ephemeral private key dei, an ephemeral public key Qei, a CA's certificate CERT[CA], and appliance j's certificate CERT[APLj], are shown. In some implementations, the static keys are stored in non-volatile memory (NVM) 114, although they could be mask programmed into a ROM memory. In some implementations, no NVM may be required and the keys can be stored offline on either a hard disc or flash memory or some other non-volatile bulk data storage medium outside of the ACC 110.

In FIGURE 3, the ACC 110 is a small hardware core embedded in a target system-on-chip (SoC) that establishes a hardware-based point of trust on the silicon die. The ACC 110 can be considered a root of trust on the consumer device 104 as it comprises tamper proof features that provide physical protection to sensitive data and methods to provide remote attestation and verification. In some implementations, the ACC 110 is able to generate a unique identifier (UID) for one integrated circuit (IC) 340, and participate in the tracking and provisioning of the IC 340 through a secure and authenticated communication channel 229 with the appliance 218. In the illustrated implementation, the IC 340 is mounted on a printed circuit board (PCB) 344 that would then be assembled into a consumer device 104. Although embedded as such, the ACC 110 can continue to serve as a root of trust on the PCB 344 and/or the final device 104.

The IC 340 may also comprise a separate micro-control-unit (MCU) 342 which can be used to establish a connection with a non-tester, e.g. a device programmer 226 by connecting connection 232 to the IC 340 via a communication interface 348 configured for a suitable protocol as is known in the art. The communication interface 348 may also be integrated into the IC 340 with a direct connection through the PCB 344 to the WAN 224. The role of the external MCU 342 may include facilitating communication of the FCT 250 between the appliance and the ACC 110 over a network (e.g. WAN 224) by receiving FCT 250 command messages through the communications interface 348 and reformatting the networked data, in this case maybe a stream of bytes, into a format that it could pass over its (the MCU's) memory mapped interface through the ACC 110 parallel interface 366 for processing by the ACC 110. Conversely, the ACC 110 may return FCT 250 response messages over its parallel interface 366 to the external MCU 342 for the MCU 342 to translate into a stream of bytes and transmit over the communications interface 348 back to the appliance 218. The ACC 110 may connect to the agent 220 and thus the appliance 218 via a test interface 372 (e.g. JTAG) which in turn bridges the connection 228.

The appliance 218 is a secure module used to cache, distribute and collect provisioning data and responses to/from one or more agents 220. For example, when an ACC 110 comes on-line, the appliance 218 can track the parts that it is connected to using the ACCs unique ID (UID). The appliance 218 and the ACC 110 may then proceed to exchange key information and open up a tamper resistant communication channel 229, which allows data to be transferred in such a way that the ACC 110 can be certain that it is talking to an authorized appliance 218, and the appliance 218 can be assured that only one unique ACC 110 can decrypt and respond to the message it has sent. Ultimately, the ACC 110 can be issued FCTs 250, and provide FCT responses which contain provisioning commands, secure data, key information, serialization information and any other data the appliance 218 wishes to provide to, push to, upload to, inject into or collect from the ACC 110 or the device 104 in general.

The agent 220 may be considered a piece of software that manages the lower-level data transmission between the appliance 218 and the ACC 110. Each agent 220 is coupled to a tester 216 or device programmer 226, and is responsible for passing data transparently between the appliance 218 and the agent 220. The agent 220 comprises a transport layer API with which the appliance 218 may be used to issue commands and receive responses to/from the ACC 110. Secure operations performed by the appliance 218 may be performed within the HSM 219. The tester 216 or device programmer 226 can be physically connected to the chip through the standard JTAG IEEE 1 149 test ports (e.g., test interface 46 and connection 228), or another programming interface depending on the application. The agent 220, in either configuration, is used to bridge the transport and physical layers. The agent 220 may be considered insecure and in the examples described herein does not perform any cryptographic functions aside from simply providing a message caching mechanism and passing messages between the appliance 218 and the ACC 110. Of course, if desired, the agent 220 can also be equipped with cryptographic capabilities of varying degrees depending on the requirements of the application.

The back-end infrastructure 211, is a general term referring to the entire backend infrastructure that is used to interface between the manufacturer and its customers/end users. Conceptually, every device ever processed by the system 200 and all programming records would be kept in a back-end database which the manufacturer may use to query the history of each part manufactured. The infrastructure may comprise a CA, database engine, ERP applications and sub-modules, a feature control server (FCS), and an e-commerce front-end server if necessary. The system 200 may also comprise connector logic to connect it to an ERP or e-commerce front end server. The typical system environment may have the back-end server located at a central location talking to an appliance 218 at a customer's manufacturing site via security protocols such as Secure Sockets Layer (SSL), Transport Layer Security (TLS), or Level 2 Security (MACSec) over the internet.

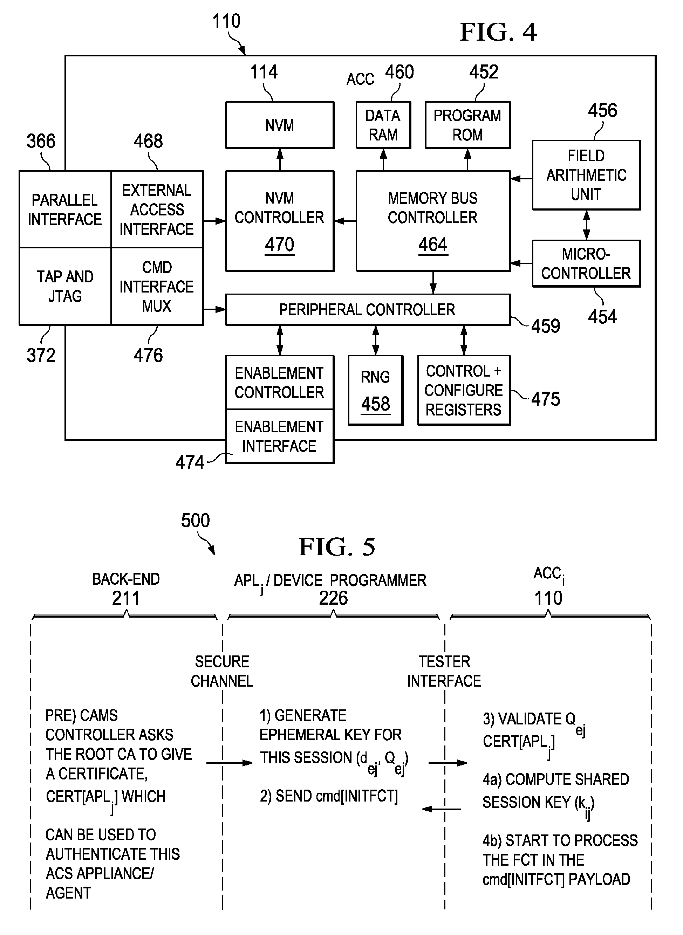

In FIGURE 4, the ACC 110 is typically a relatively small hardware core with customizable firmware stored in read-only-memory (ROM) 452. The ACC 110 also contains a small microcontroller 454, an elliptic curve cryptography (ECC) arithmetic unit 456, a hardware-based random number generator (RNG) 458, data read/write memory (RAM) 460 and non-volatile memory (NVM) 114. The ACC 110 may have the ability to participate in the elliptic curve implementation of the Menezes-Qu-Vanstone (ECMQV) protocol, the Qu-Vanstone (ECQV) implicit digital signature, the elliptic curve digital signature algorithm (ECDSA), as well as message encryption and authentication (e.g. with Advanced Encryption Standard (AES) algorithm in the CCM mode).

As noted above, the ACC 110 is designed to communicate with an appliance 218 connected to a tester 216 or something similar to a device programmer 226. In order to secure this communication channel 229, the ACC 110 may use an asymmetric cryptography scheme for key exchange, and symmetric key cryptography to transfer messages between it and the appliance 218. For asymmetric cryptography, a public key (e.g., Qsi) is generated based on a secret private key (e.g., dsi). The private key may be protected in a secure, highly tamper resistant setting. An embedded ACC 110 is able to fulfill this requirement by being able to internally and autonomously generate a unique private key, with a combination of hardware and firmware to protect the secret from being exposed. The private key is statistically unique to a particular device 104 and is permanently associated with that device 104.

The private key is kept secret, whereas the public key is shared. For the ACC 110, the public key, or some numerical derivation thereof, can be treated as the ICs unique device ID (UID) as discussed above. Since the private key has a one to one mapping with the public key, the UID is also statistically unique to a particular device 104 and is permanently associated with that device 104 (when the public key is derived from a static private key).

This technique of IC identification along with the confidentiality and authentication provided by the provisioning protocol described below, gives a chip or device vendor the ability to register every authentic part in a database, to enact enforcement measures in order to detect and prevent impropriety in the manufacture and distribution of the device 104 such as cloning and reselling over-production parts.

The UID can be used as part of the security protocol to establish a secret between the appliance 218 and the ACC 110 through mutual key agreement. During key agreement, public keys are traded between two parties, each party generates a shared key independently of the other, using only the public keys that were exchanged in the open, and his/her own private key that is kept secret. The result of key agreement is that the two parties arrive at a secret shared between only the two of them, while any third parties trying to listen in could not complete the agreement unless they have copies of the private keys.

The appliance 218 and ACC 110 can also participate in an ECMQV key agreement scheme, which generates a secret key that is known only to the two parties involved. The shared secret generated (e.g. kij) is the basis and prerequisite for symmetric key cryptography, that is, it is used to establish a highly tamper resistant encrypted and authenticated communication channel 229 between the two parties. Once both parties agree on a symmetric key, the appliance 218 can start issuing signed confidential messages, also known as FCTs 250, to the ACC 110 in a secure and authenticated manner. FCT 250 commands are messages containing either feature provisioning, read/write access to protected NVM 114 memory regions, or any other command or message to be provided to the ACC 110 in a controlled, secured and traceable manner. FCT 250 responses are confidential and authenticated messages containing status, audit data or any other command or message to be provided to the appliance 218 in order establish, maintain or comply with the secure provisioning protocol. Privileges can be used to positively enable features at test and manufacture time, or enable features upon reconnecting to a server or device programmer 226 in the after-market. The lack of privileges can be used negatively to disable non-authorized features in a suspect device, whether it being a clone, a counterfeit or otherwise stolen device. Completely secured feature provisioning may be achieved through the combination of various cryptographic techniques, examples of which are as follows. Each ACC 110 may have a Root CA public key stored in its ROM 452 or NVM 114.

Each appliance APLj 218 may then have its own unique certificate CERT[APLj] produced by the Root CA (not shown). The certificates may be relatively small (e.g. custom mini-certificates or ECQV implicit certificates) and the certificate fields bitmapped for easy parsing. The appliance 218 authenticates itself to the ACC 110 by sending a certificate to the ACC 110 as part of the protocol (to be discussed in greater detail below). The ACC 110 uses the CA root certificate to verify the identity of the appliance 218.

Each appliance 218 can have a customer ID (CID) assigned to it that is sent along with the certificate. The CID in the certificate should match one of the CIDs stored in the ACC 110 to ensure that a particular appliance 218 belongs to the proper owner/producer of a particular device 104 and is authorized to communicate with the embedded ACC 110. Multiple CIDs on an ACC 110 allows for different vendors on a tiered manufacturing process to provision features that they own. For example, an application specific integrated circuit (ASIC) vendor would configure the SoC for a particular original equipment manufacturer (OEM), who then configures the device to target a particular equipment seller or service provider, and finally the end customer might be allowed to activate yet another subset of configurations based on his/her service plan.

The ACC 110 can be made to enforce access control to the third party vendor owned features according to the access control policies for the participating vendors. The original owner of the SoC could potentially load an access control configuration table as part of its provisioning. Each FCT 250 from the appliance 218 to the ACC 110 is encrypted, integrity protected, authenticated, and protected against replay and spoofing in this implementation. Each FCT 250 may be keyed to the UID of a specific ACC 110, and feature privileges granted only on a per device basis upon the success of unlocking the FCT 250 with a device's private key. A fraudulent device attempting to intercept an FCT 250 locked to another UID would then fail to decrypt the FCT 250. Each FCT 250 may also be provided with a counter number associated with it such that an FCT 250 can only be used once to prevent them from being copied or replayed. Each FCT 250 may be signed by the appliance 218 that issued it so that the FCT 250 cannot be altered in an undetectable manner.

The response from the ACC 110 back to the appliance 218 can be configured to have a counter number and a message authentication code (MAC) so that even the response cannot be altered or replayed. Since the FCTs 250 are linked to a specific UID, the appliance 218 can keep an audit log showing where and what a particular UID was programmed. The audit log can be reported back through the backend 211 to the SoC manufacturer/vendor. Should multiple instances of the same UID be detected in a review of these log files, it would be an indication that a chip has been cloned or counterfeited.

The use of ECMQV provides an encrypted tunnel 229 that links a specific appliance 218 to a specific ACC 110. No other party can participate in this protocol or decrypt commands sent during an encrypted programming session. ECMQV in particular, may be chosen as the technique to create the channel 229, since it is known to be resistant to the man-in-the-middle attack, which is a credible threat in the environment shown.

The ACC 110 and appliance 218 can be configured in various ways to suit a particular environment. The following discusses various features that enable such configurability. The ACC 110 should utilize a very small total silicon area, and should support on-chip (self-contained in ACC 110) generation of a UID, and on-chip generation and storage of ECC public-private key pairs. Enablement/disablement of scan chain testing of the ACC 110 should be available prior to ACC key pair generation to prevent the private key from being revealed. Authentication/integrity protection of commands from the appliance 218 to the ACC 110 should be provided, and security-critical commands should be unique to a specific ACC 110. FCTs 250 between an appliance 218 and the ACC 110 should be encrypted for confidentiality and features may be enabled and disabled via FCTs 250 provided to the ACC 110.

The ACC 110 may function as a protocol enforcer - if the received commands are invalid, the ACC 110 can reject them and optionally shut down if a threshold of invalid commands were attempted. There may also be the ability to ensure that once the ACC 110 is locked out, (as in the case when the device is to be retired permanently, or if the system 200 detects the device has been tampered with,) the ACC 110 cannot be re-enabled. When not in use, the ACC 110 may be capable of powering down to very low current drain, and the ACC 110 operation should not rely on external (off-core) firmware or an external CPU to perform its basic functions.

The agent 220 and/or any suitable interface (e.g. 346, 348) can provide the flexibility to allow customers to add their custom programming interfaces to the ACC 110, which ultimately allows customers to communicate with the ACC 110 using a variety of device programmers 226 (e.g., USB port, I2C serial interface, Ethernet, etc.). Similarly, ACC 110 programming should be capable of taking place at multiple locations, at multiple times, provided it can open up a secure communication channel 229 with a trusted appliance 218. In this way, programming can be deferred until the least costly phase of the manufacturing cycle. The appliance 218 and the ACC 110 can be used to securely program and store additional information such as unique device identification numbers (e.g., IMEI/ESN for mobile phones).

The ACC hardware in this example comprises a microcontroller 454, a memory bus controller 464 to access scratch data RAM 460 and NVM 114, and several memory mapped peripherals, including an arithmetic unit 456 (configured for EC operations), an RNG 458 accessible through a peripheral controller 459 and, although not shown, optionally an AES and SHA core (if the area / performance trade-off is feasible). Additionally, the ACC 110 can have an optional generic parallel bus interface 366 and external-access NVM interface 468 to add flexibility for SoC designers. At the center of the ACC 110 is the microcontroller 454, which plays an integral part in all the tasks that the ACC 110 accomplishes, including: authenticating and executing provisioning commands and enforcing provisioning; executing high-level security protocols; assisting in sequencing the low-level hardware cryptographic accelerator functions, performing management tasks such as initialization, configuration, power management; and assisting in maintenance built in self-test (MBIST) and a RNG BIST during wafer testing. The microcontroller should be chosen primarily for its size, then enhanced to meet speed performance where deemed necessary.

The field arithmetic unit 456 provides hardware acceleration of the low-level cryptographic calculations. The field arithmetic unit 456 may be used to accelerate the ECDSA (or the ECQV) and ECMQV public key algorithms used to provide, respectively, authentication and mutual authentication.

The hardware and firmware typically trade off in terms of area, code memory, complexity, and performance metrics. Decisions based on what will be implemented in hardware are typically primarily gate-count and performance driven. The performance of the ACC 110 has direct cost implications measured in terms of tester time, and the equivalent gate count drives the cost of implementation as measured by silicon area.

The RNG 458, with the help of a software conditioner (not shown) can be used to generate statistically random numbers used as cryptographic keys and UIDs. In elliptic curve public key cryptography schemes, a random number is used as the private key, and when it is multiplied, using elliptic curve scalar point multiplication, by the previously agreed upon Generation Point of the curve parameter, the product would be the public key. The RNG 458 can be used when the ACC 110 generates its static private key pair which is static throughout the entire life of that ACC 110. In addition, a new ephemeral key is created for every secure session between an ACC 110 and an appliance 218. Whenever the ACC requires a new static or ephemeral key to be generated, the RNG 458 is asked to provide a random bit stream to be used as the seed to generate the private static or ephemeral key. The random bit stream feeds into an AES block cipher to condition the raw entropy produced by the RNG, producing a uniformly distributed random number that is used as the static private key. In some implementations, prior to feeding into the AES block cipher, the random bit stream can be fed into a software-based linear feedback shift register (LFSR) to condition the RNG data. As part of design for testability (DFT) testing, the ACC 110 should be asked to perform a health check of the RNG 458.

The ACC 110 in this example can have a 16-bit address, ranging from 000Oh - FFFFh, byte addressable memory spaces. The following Table 2 lists how the memory space may be divided into distinct regions in this implementation.

**Table 2 - Memory Space Allocation**

| start addr | end addr | # of bytes allocated | Name | Description |
|---|---|---|---|---|
| 0x0000 | 0x0FFF | 4K | XRAM | General purpose scratch data ram |
| 0x1000 | 0x1FFF | 4K | - | *reserved* |
| | | | | |
| 0x2000 | 0x21FF | 512 | NVPRIV | Private Space of the NVM |
| 0x2200 | 0x23FF | 512 | NVPROT | Protected Space of the NVM |
| 0x2400 | 0x2FF | 3K | NVSHARE | Shared Space of the NVM |
| | | | | |
| 0x3000 | 0x3FFF | 4K | ACCREG | ACC registers |
| | | | | |
| 0x4000 | 0x7FFF | 16K | DBG | Idebugger storage *(reserved)* |
| | | | | |
| 0x8000 | 0xDFFF | 16K | ROM | Instruction Program ROM |
| 0xE000 | 0xFFFF | 16K | - | *reserved* |

The microcontroller scratch space (XRAM) in the above table can be used for temporary data storage by the microcontroller 454. It may be implemented as fast, single-cycle access, 8-bit byte addressable, 32 bit data static RAM. The actual amount of scratch space should be defined based on firmware usage. The ACC 110 may be configured to have a generic interface to an NVM storage element 114 such as OTP, MTP, EPROM, FLASH, etc. NVM 114 is IC technology dependent, so an NVM interface 470 for such NVM 114, is likely defined according to the specific application. The NVM interface 470 provides abstraction and should have the capability of writing, rewriting and erasing the UID in a secure manner that is easily adapted to a proprietary NVM interface protocol. Certain types of NVM 114 are one-time programmable (OTP); which means that once they are "burned" they cannot be erased or re- written into that memory location. If OTP memories are used, then firmware is needed to make sure that it keeps track of which memory locations have already been written to and maintain a mechanism which is used to find the latest data content and where there is available free space.

In this implementation, there are three distinct NVM permission levels, each permission level having different restrictions placed on them. First, for private space permission level, NVM 114 is reserved for the ACCs use exclusively. The ACC 110 can read and can write, but other agents are prohibited to access this region. Data stored in this region may include the secret static key, the UID, and the non-volatile state of the ACC 110. Second, a protected public space permission level, wherein external agents can only write data in this region using the FCTs 250 and the secure messaging protocols with authentication as will be described below. This region may be readable/writable from the JTAG port 472 with the RDACCESS/WRACCESS type FCTs 250. This region may also be readable from the parallel command interface 366 with a normal memory access, similar to RDACCESS FCTs 250. Typically, this region contains secret data that the customer would want to store in NVM 114 that are only allow accessible by on-chip logic, assuming the on-chip logic does not leak that data to outside the chip. Third, a shared memory space permissible level, containing other data to be stored in NVM 114 that that the ACC 110 does not need to protect. External agents can read and write in this region either with the cmd[SHARENVMWR] or the cmd[SHARENVMRD], or by using direct memory access from the parallel command interface 366. The "cmd" commands will be explained in greater detail below. At a minimum, the ACC 110 should have enough NVM 114 space with a "private" permission level to store on-chip secrets.

One of the many applications for the ACC 110 is to provide a way to enable and disable features based on customer requirements. Although the exact feature set defining what can be enabled or disabled is to be provided by the customer, the following describes how a provisioning interface 474 may be used such that adaptations can be made according to specific customer requirements. In short, as noted above, the ACC 110 comprises a set of output ports, denoted by the enablement controller and interface 474 in FIGURE 4 and evaluates the aggregate of these outputs indicates which features are enabled and which are disabled. In some implementations, there is one enable signal detected over the enablement controller and interface 474 per feature item that would need to be enabled or disabled. The raw data that determines the values output to the enablement controller and interface 474 may come from the NVM 114. It is possible to encode or scramble the enable signals such that there is not a one-to-one mapping of a particular feature to a single enable signal. In this case, multiple bits of signals may be evaluated to determine whether a particular feature has been enabled. Individual customer application may determine whether this is necessary or feasible, this way, unauthorized feature enabling can be made more difficult, at the cost of some additional logic. However, whether scrambling is even necessary depends on the actual feature list from the customer and which threat models are being considered. If the ACC 110 has been compromised, as will be explained below, it is transitioned into a lock-out state, wherein the feature enablement is automatically set to some very primitive value where only a bare minimum set of features are enabled for debugging and post-mortem analysis. The feature enablement value when in the lock out state may be different than the initial feature enablement of a new device 104 depending on customer requirements.

The amount of time for which the ACC 110 is active is typically relatively short, and therefore power consumption while it is inactive should be considered more important than while it is active. The ACC 110 may include power management circuitry provided by the underlying silicon technology to reduce power when it is inactive. For example, techniques that can be used to save power when the ACC 110 is inactive, which includes clock gating and power gating, may be used. The ACC 110 shown in FIGURE 4 also provides a bi-directional generic serial command interface 476 to a JTAG test access port (TAP) controller 472 as defined in the IEEE 1149 (JTAG) specification. The controller 472 is simply a state machine and implements the feature provisioning commands as JTAG user-defined commands. The JTAG specification provides a nicely defined tester interface that can be used by the tester to translate high level commands from the provisioning server into tester commands that are communicated to the design-under test (DUT) through the tester interface.

The ACC DFT features that can be implemented comprise the following:
1) Software MBIST of the RAM 460 and NVM 114 can be initiated by a command issued by the tester 216. MBIST for RAM 460 and NVRAM involves a fixed pattern across the rows and columns of the memory then reading them back to make sure it contains what is expected. However, if OTP NVM 114 is used, it is impractical to test every address location, so the pattern may be applied to only one address location.
2) Partial scan chain testing inserted for the registers inside the ACC 110, initiated and controlled by the tester 216. Registers, which may be a sub-set of control and configuration registers 75 in the ACC 110, deemed to contain sensitive information are excluded from scan chain. The following registers may be excluded from scan chain: Life Cycle State and System Ready registers, feature enablement registers, reset enable register, cross-clock domain synchronization latches, and DFT enable/disable register.
3) JTAG Boundary scan is used to test the primary I/O of the IC 340. This is added security to make sure the ACC 110 was not disconnected, which might be an indication of an attack. All ACC 110 DFT features are controlled by the ACCs own TAP controller 472 and, as such, the hardware should be designed so that the DFT features can be enabled and disabled based on the state of the ACC 110. An uninitialized ACC 110 powers up into a Test State and has DFT features enabled by default. When the ACC 110 receives a cmd[EXITTEST], software then causes a transition from the Test State to the Initialization State. As a result of this transition, the hardware can determine that it is no longer in the Test State and disables DFT features until it is enabled again.

In this implementation, appliance 218 commands are sent serially through the JTAG interface to the ACCs TAP controller 472 as described above. It is possible that in some applications, it would be desirable to have an alternate way of issuing commands to the ACC 110 besides a TAP controller 472, and thus a second interface for commands to be sent can be provided, namely a generic programming interface. Such a generic programming interface is considered to be simply a 16-bit or 32-bit processor interface.

The parallelized output from the two command sources should be multiplexed (MUXED) together and only one command interface should be active at any time. The command interface 476 chosen is the one that issues the first command (the TAP controller 472 may be chosen as the default in case there is a tie). The selected interface is the active interface until a cmd[REQRESP] is completed or an explicit cmd[STOPACC] is issued or if the device 104 resets. The purpose of the command processing state machine, which is implemented in protected firmware running on the MCU 454, is to perform a preliminary decode and filter of the commands issued by the appliance 218 to see how to handle them.

In FIGURE 5, a protocol for establishing a secure communication session using key agreement is illustrated. Up to this point in the present example, all the testing and initialization commands between an appliance 218 and an ACC 110 that have been described thus far are sent "in the clear". In order to start secure communications, the two parties will need to participate in a key agreement protocol, and the cmd[INITIALFCT] can be used to do that.

The cmd[INITIALFCT] is broken up into two parts: the first part has all the necessary information needed by the ACC 110 to derive a shared secret for a new key session and the second part contains the first FCT 250 that needs to be processed. For the protocol, several preconditions may exist. First, an initialized ACC 110 would have already generated its static and ephemeral keys, (dsi, Qsi), (dei, Qei). If these first two preconditions are not satisfied, the initialization sequence may be executed. The appliance 218 has its static key pair, (dsj, Qsj), and a certificate CERT[APLj] signed by the Root CA. Also, APLj 218 has some indication that it needs to communicate with ACC 110. This could be either a manufacturer wanting to preset some default features before shipping, or could be a customer requesting a new feature on his/her device to be enabled. Another precondition is that ACC 110, has been pre-programmed with the Root CA's public key, Qca, in its ROM 452. Optionally, ACC 110 is pre-programmed with a primary customer ID (CID) in its ROM 452. ACC 110 has not received another cmd[INITIALFCT] after it was last rebooted. If it did, it's considered as a protocol error. Finally, a precondition is that ACC 110 is ready to handle a new command. This means that ACC 110 is in a functional state (i.e. not in hibernation mode) has completed all previous tasks, and is now waiting.

The output will be the status FAILURE, or the status SUCCESS and ACC 110's ephemeral public key, Qei. It may be noted that various side effects can occur. ACC 110's message counter number, msgID, may get reset to zero, and both parties could have generated the shared session key, kij, independently from each other.

The procedure shown in FIGURE 5 proceeds as follows. The appliance 218 generates its ephemeral keys for this session (dej, Qej). The appliance 218 then issues a cmd[INITIALFCT] with the request data being (Qej, CERT[APLj], EM_len, EMnij). The ACC 110 receives the command and validates the certificate, and the public key, ECDSA_VERIFY(CERT[APLj], Qca) and public key validation (Qej), respectively at 3). The ACC 110 then extracts Qsj from CERT[APLj]. If the protocol requires matching a customer ID (CID), a CID field in the CERT[APLj] would have to match against the CID stored in ACC 110.

The ACC 110 then computes a shared session keykij with ECMQV (dsi, dei, Qsj, Qej) at 4a). If successful, the ACC 110 continues on to process decrypt and authenticate the FCT 250 in the rest of the payload. Otherwise, the ACC 110 may stop here and prepare a FAILURE response. If the response is FAILURE, the appliance 218 can either restart the sequence or issue a cmd[LOCKOUT]. The appliance 218 can optionally log the error in the database.

A few additional features may be noted. First, if everything was successful, the shared session key kij computed at the end of this sequence forms the basis for an encryption tunnel using symmetric key ciphers between linking an authorized appliance 218 to a specific ACC 110. Any other ACC 110 or appliance 218 would not be able to participate in any further communications between the two because kij is known only to the two authorized parties. This sequence may not be repeated without a reboot, by using either a hard reset, or a cmd[STARTACC]. There should be no limit as to how many times the ACC 110 can be rebooted, but each time the ACC 110 reboots, a new ephemeral key will need to be regenerated.

The ACC 110 verifies CERT[APLj] using a copy of the Root CA' s public key that the ACC 110 has in its ROM 60. The certificate validation step lets the ACC 110 know that the root CA has authenticated and qualified this particular appliance 218 to issue commands to this ACC 110. This is to prevent untrusted appliances 218 from issuing sensitive commands to the ACC 110. If a particular application requires the use CIDs, the certificate will contain a CID which has to match with a CID stored in a table in the ACCs ROM 60. This is to meant prevent an appliance 218 assigned to a particular customer from being used to connect to parts manufactured for another customer. If the CID in the certificate is not found in the CID table, it will be treated as an error.

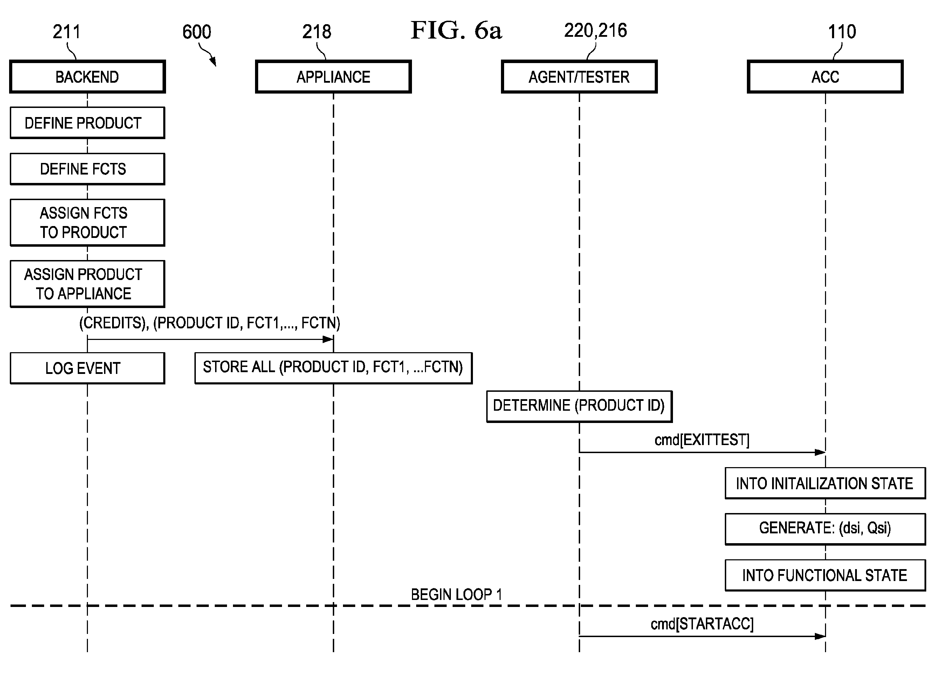

Referring to FIGURE 6a, it can be seen that the backend infrastructure 211, which may represent the original manufacturer, would first define a product, define FCTs 250, and assign such FCTs 250 to the product. As discussed above, the system 200 may comprise multiple appliances 218 at multiple locations. The backend 211 would then assign a product to an appliance 218 and provide credits for producing an agreed upon or stipulated number of that product, as well as the product ID, and the FCTs 250 to appliance 218. The backend 211 at this time may log the event to record which appliance 218 is associated with which product, how many credits were provided, and the number and nature of the FCTs 250 for that product. The appliance 218, upon receipt, would store the product ID, FCTs 250 and retain a record of the number of credits it has received.

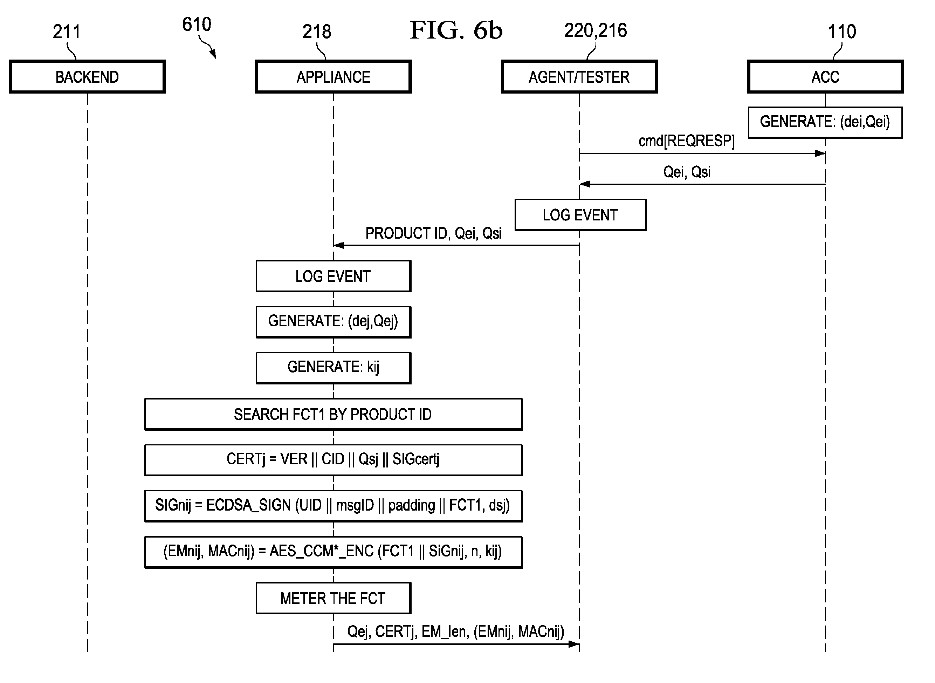

The agent 220 then determines the product ID associated with the product being provisioned or communicated with and sends the command cmd[EXITTEST] to transition the ACC 110 into an initialization state. The ACC 110, upon transitioning, generates its static private key dsi and its static public key Qsi and transitions into a functional state. A first loop, Loop 1, now begins, which comprises a series of transactions between the appliance 218, agent 220 and ACC 110 that represent a complete feature provisioning operation defined by either the cmd[INITIALFCT] or cmd[FCT]. Loop 1 in this example is an outer loop based on a single cmd[INITIALFCT] to initialize a channel 229 for processing FCTs 250. Loop 1 would be repeated for each ACC 110 (e.g. in a production line), or anytime the secure tunnel 229 needs to be established by deriving a shared secret with an ECMQV key exchange algorithm between the ACC 110 and appliance 218. The derivation of the shared secret requires the cmd[INITIALFCT]. Loop 1 begins with the agent 220 sending a cmd[STARTACC] to the ACC 110 and, now that the ACC 110 has transitioned into the functional state (moving now to FIGURE 6b), the ACC 110 can generate an ephemeral private key dei and an ephemeral public key Qei.

The agent 220 sends the cmd[REQRESP] to the ACC 110 to obtain the ACCs public keys Qei and Qsi and the ACC 110 responds by providing such keys to the appliance 218 via the agent 220. The agent 220 logs the event and also provides the product ID associated with the ACC 110 and its public keys to the appliance 218. The appliance 218 logs this event, generates its own ephemeral key pair dej, Qej; generates the shared key kij; and searches FCT1 by product ID to ensure that the feature associated with FCT1 is intended to be used in that product. The UID, msgID, some padding, the FCT1, and the static private key dsj of the appliance 218 are then combined (e.g. concatenated) and signed using the ECDSA_SIGN function to generate the signature SIGnij.

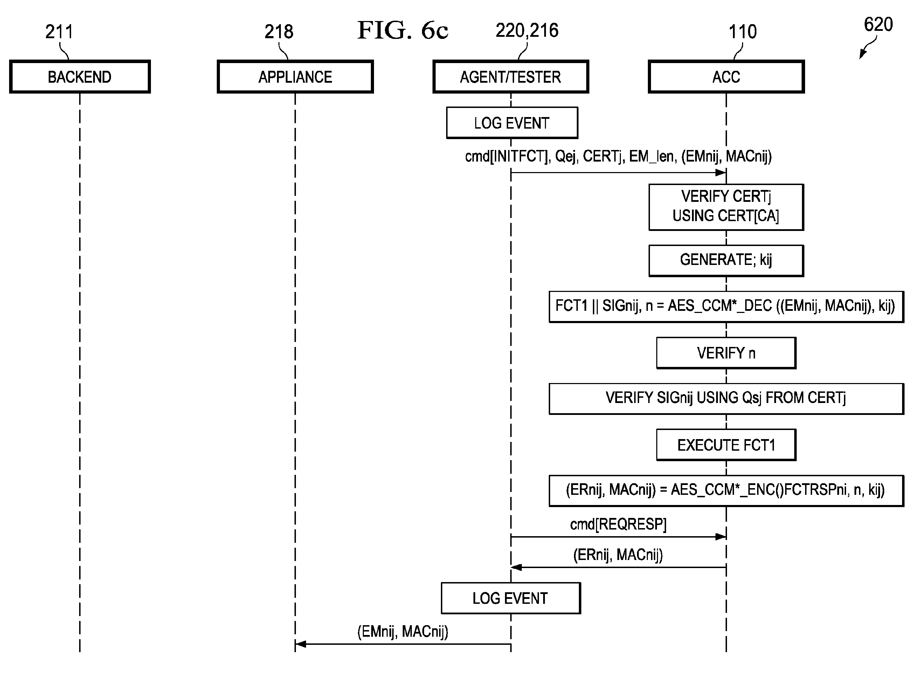

Using the FCT1, the shared key kij, the nonce n, and SIGnij; (Enij, MACnij) is generated using the AES_CCM*_ENC function as shown in FIGURE 6b. The FCT 250 is then metered to indicate consumption of one credit, and the ephemeral public key Qej, the appliance's certificate CERTj, the encrypted message/MAC pair (EMnij, MACnij), and EM_len are then sent to the ACC 110 via the agent 220 (moving now to FIGURE 6c). The agent 220 would log this event and also send the cmd[INITIALFCT] to the ACC 110 to begin the feature activation procedure.

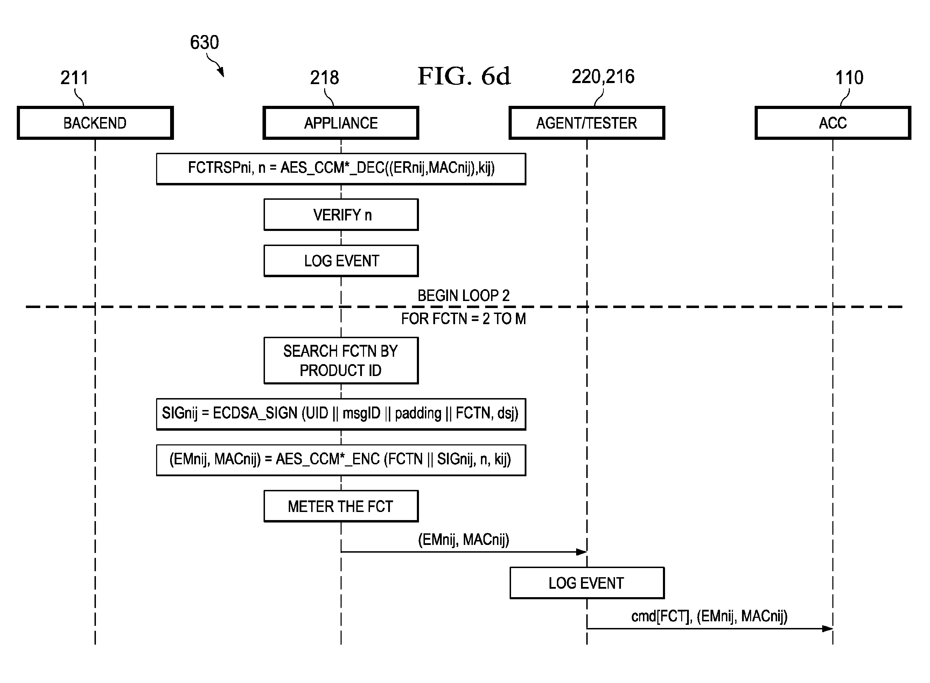

The ACC 110 begins by verifying CERTj using CERT[CA] to thus verify that it is communicating with the proper appliance 218. Once CERTj is verified, the ACC 110 then generates the shared key kij. FCTI and SIGnij are then recovered using the AES_CCM*_DEC function, using the pair (EMnij, MACnij), the shared key kij and the nonce n. The signature SIGnij is then verified using Qsj obtained from CERTj. The FCT1 may then be executed. An encrypted response pair (ERnij, MACnij) is then generated using the AES_CCM*_ENC function, which takes the FCTRSPni, the nonce n, and the shared key kij as inputs. At some point, the agent 220 then sends the command cmd[REQRESP] to the ACC 110, from which the ACC 110 responds by providing the pair (ERnij, MACnij). The agent 220 logs the event and forwards (ERnij, MACnij) to the appliance 218 (moving now to FIGURE 6d).

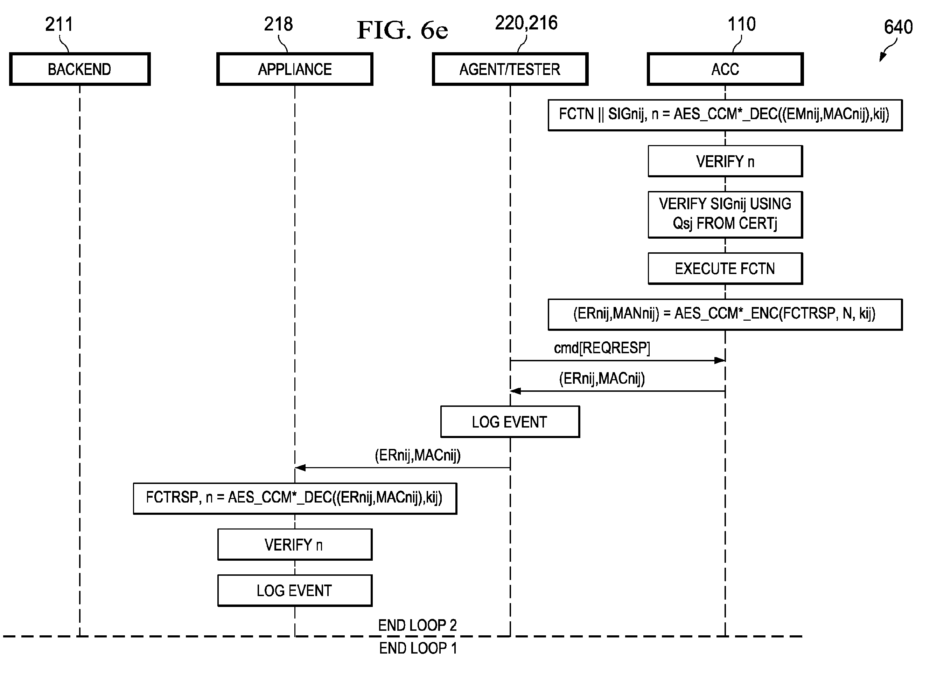

The appliance 218 then decrypts (ERnij, MACnij) using the shared key kij and the nonce n as the inputs into the AES_CCM*_DEC function to obtain the FCTRSPni message. The appliance then logs the event. Next, an optional second loop, Loop 2 may then be executed for FCT[N = 1 to M] additional FCTs 250 as required. Since the cmd[INITIALFCT] has already run, namely in the outer loop, Loop 1, the ephemeral keys and shared secret already exist in the ACC 110 and appliance 218, so further provisioning can be done with the FCT 250 command or multiple FCT 250 commands. Once all FCT 250 commands have been executed Loop 2 finishes and then Loop 1 can repeat for a new ACC 110. It can be seen that for each additional FCT 250, that FCT 250, e.g. FCTN is searched by product ID and then the appliance 218 can proceed directly to the generation of SIGnij and the process described above repeated wherein various components already exchanged (e.g. Qej, CERTj) need not be sent again. Loop 2 and then Loop 1 ends on FIGURE 6e.

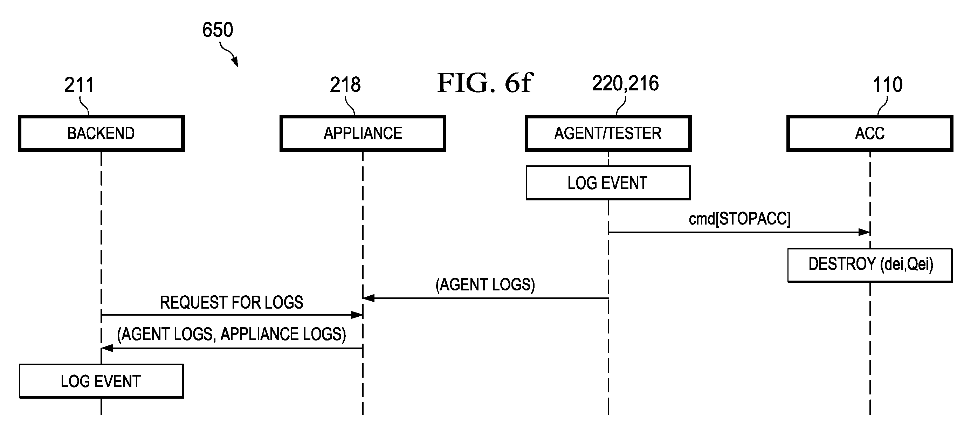

Turning now to FIGURE 6f, the agent 220 then logs the event, issues the command cmd[STOPACC], at which time ACC 110 destroys the ephemeral keys dei, Qei. The agent 220 then sends its accumulated logs to the appliance 218. The backend 211 may then request the logs of the agent 220 and appliance 218 by requesting same from the appliance 218. The appliance 218 then sends the agent logs and the appliance logs to the backend 211, and the backend 211 can make a final log of this event.

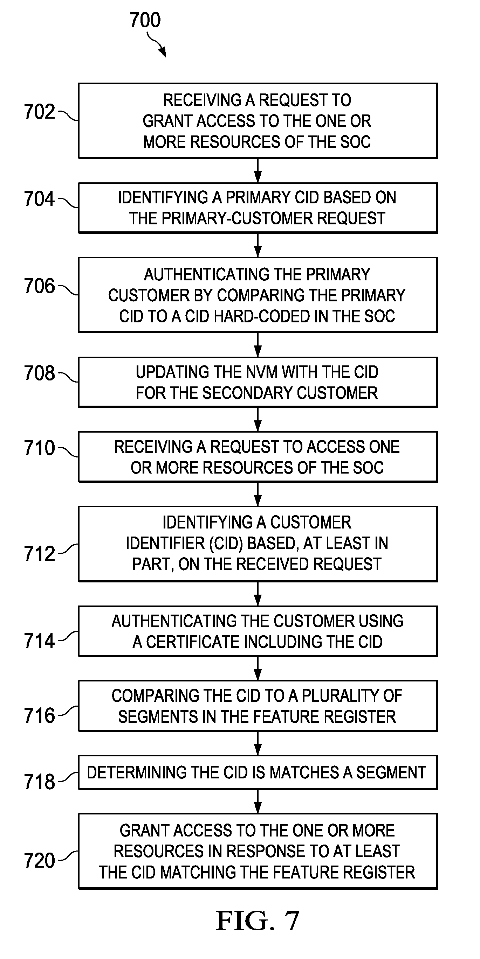

FIGURE 7 is a flowchart illustrating an example method 700 for managing resources of an SoC. In particular, the methods 700 allow an authenticated primary customer to grant a secondary customer access to a subset of the resources of the SoC. This method is for illustration purposes only and that the described or similar techniques may be performed at any appropriate time, including concurrently, individually, or in combination. In addition, many of the steps in the flowchart may take place simultaneously and/or in different orders than as shown. Moreover, systems may use methods with additional steps, fewer steps, and/or different steps, so long as the methods remain appropriate.

Method 700 begins at step 702 where a request to grant access to the one or more resources of the SoC is received. For example, the customer 102a in FIGURE 1 may transmit a request to the ACC 110 to grant access to resources of the SoC 106. At step 704, a primary CID is identified based on the primary-customer request. In the example, the primary CID may be extracted from the request from the primary customer 102a, and a certificate including the CID may have previously been issued to the primary customer 102a. Next, at step 706, the primary customer may be authenticated by comparing the primary CID to a CID hard-coded in the SoC. Again in the example, the ACC 110 may identify a primary CID hardcoded in the SoC 106 and authenticate the primary customer 102a by determining the hardcoded CID matches the primary CID in the request. After granting access to the primary customer 102a, the NVM may be updated with the CID for the secondary customer and setting associated with accessible resources at step 708. Returning to the example, the AC 110 may update a protected area 118 with a secondary-customer CID and associated settings for accessible resources based on information identified in the request. At step 710, a request to access one or more resources of the SoC is received from a secondary customer. As for the example, the ACC 110 may receive a request to access a resource of the SoC 106 from the secondary customer 120b. Next, at step 712, a secondary CID is identified based on the received request. In the example, the ACC 110 may extract a secondary CID from the received request. The secondary customer is authenticated using a certificate including the CID at step 714. At step 716, the secondary CID is compared to a plurality of segments in the feature register. In the example, the ACC 110 may determine if the secondary CID matches any of the CIDs identified in the feature register 112. Next, at step 718, a match between a CID stored in the feature register and the secondary CID is determined. The secondary customer is granted access to one or more resources in response to at least the CID matching the feature register. As for the example, the ACC 110 grants the secondary customer 102b access to the one or more resources identified by the matching segment 116.

A number of implementations of the invention have been described. Nevertheless, it will be understood that various modifications may be made without departing from the spirit and scope of the invention. Accordingly, other implementations are within the scope of the following claims.

## Claims

1. A method for managing resources of a device, comprising:
receiving, by a system-on-chip (SoC) in the device, from a customer, a request to access one or more resources of the SoC, the SoC includes a non-volatile memory (NVM), a feature register, programming history, and a plurality of resources including the one or more resources;
identifying a customer identifier (CID) based on the received request;
authenticating the customer using a certificate including the CID; and
determining, using the feature register and the CID, whether the SoC grants, to the customer, access to the one or more resources.

2. The method of claim 1, wherein the one or more resources includes at least one of a feature, a parameter, a key, data, or a hardware-module configuration data.

3. The method of claim 1 or 2, wherein determining whether the SoC grants access to configure the one or more features comprises:
comparing the CID to a plurality of segments in the feature register, wherein each of the plurality of segments are assigned to an associated customer;
determining the CID is absent from the plurality of segments; and
prohibiting access to the one or more resources in response to at least the absence of the CID in the feature register.

4. The method of any preceding claim, wherein the customer comprises a secondary customer, further comprising:
receiving, from a primary customer, a request to grant access to the one or more resources of the SoC;
identifying a primary CID based on the primary-customer request, wherein a certificate for the primary customer includes the primary CID;
authenticating the primary customer by comparing the primary CID to a CID hard-coded in the SoC; and
updating the NVM with the CID for the secondary customer CID to identify the one or more resources as accessible by the secondary customer.

5. The method of any preceding claim, further comprising prohibiting access to one or more resources by the primary customer in response to at least granting access to the secondary customer.

6. The method of any preceding claim, further comprising:
identifying initialization of the device; and
uploading, from the NVM, to the feature register, a plurality of CIDs and information identifying accessible resources for each of the CIDs, wherein each of the plurality of CIDs and associated information identifying accessible resources are stored in different segments in the feature register.

7. The method of any preceding claim, wherein the customer comprises a secondary customer, and determining whether the SoC grants access to the one or more resources comprises:
granting, to the secondary customer, temporary access to the one or more resources in response to at least a match between the second-customer CID and the feature register, wherein the temporary access is granted by updating the feature register with the second-customer CID independent of updating the NVM; and
in response to initialization of the device, overwriting the second-customer CID in the feature register and associated grants using information stored in the NVM, wherein the overwriting prevents the second customer from accessing the one or more resources.

8. The method of claim 7, wherein the secondary customer comprises the primary customer, the method further comprising executing one or more processes to test the one or more resources assigned to the secondary customer during the temporary access, wherein the test processes are initiated by the primary customer.

9. The method of any of claims 1 to 6, wherein the customer comprises a secondary customer, and the feature register is configured to grant the secondary customer access to a first subset of resources and grant a third customer access to a third subset of resources different from the first subset of resources.

10. The method of any of claims 1 to 6, wherein the customer comprises a secondary customer, the one or more resources includes a protected area in the NVM, and the feature register is configured to grant both the secondary customer and a third customer access to the protected area in the NVM.

11. The method of any preceding claim, wherein the authentication is based on the certificate including the CID, a static public key of the customer, and a signature of a Certificate Authority (CA) applied to the certificate.

12. The method of any preceding claim, further comprising establishing secure communication between Asset Control Core (ACC) including the NVM and the feature register, programming history and the customer, wherein access to the NVM and the feature register is secured with encryption and authentication using certificates.

13. An system-on-chip (SoC), comprising:
a non-volatile memory (NVM) configured to store CIDs and information identifying accessible resources associated with a CID;
a feature register for storing the CIDs and the resource information when the device is activated;
programming history;
a plurality of resources configured to provide services; and
one or more processors configured to perform the method of any preceding claim.

14. A computer program product for managing resources of a device, the computer program product comprising computer readable instructions embodied on tangible, non-transitory media, the instructions operable when executed to perform the method of any of claims 1 to 12.
